Europäisches Patentamt

**European Patent Office**

Office européen des brevets

(11) Publication number: **0 053 583**
A1

# (12) EUROPEAN PATENT APPLICATION

(21) Application number: **81830191.3**

(22) Date of filing: **12.10.81**

(51) Int. Cl.³: **A 01 K 5/00**

(30) Priority: **02.12.80 IT 4690780**

(43) Date of publication of application: **09.06.82**
Bulletin **82/23**

(84) Designated Contracting States: **DE FR GB**

(71) Applicant: **GUIMA F. LLI GUALDI & C. S.n.c., Via Pervilli - Zona Industriale Mancasale, Reggio Emilia (IT)**

(72) Inventor: **Veroni, Giuseppe, Via Martiri 49, Rio Saliceto Reggio Emilia (IT)**

(74) Representative: **Bonfreschi, Mario, Bugnion S.p.A. Viale Trento Trieste, 25, I-41100 Modena (IT)**

(54) **Apparatus for drawing feed from cylindrical bales of hay, straw or other provender.**

(57) It has become common practice to gather hay, straw or other provender into large, heavy cylindrical bales – and there exist a variety of apparatus designed for subsequent extraction of the feed therefrom.

The invention relates to like apparatus, proposing both improvements and simplification with regard to existing types.

To this end there is a mobile conveyor platform (1) furnished with teeth (4) which draw the bale (24) on, urging it against a backprop, or stay (9) – this also producing movement in order to assist rotation of the bale.

At the same time, the conveyor platform's (1) teeth strip feed from the bale and carry it onto a further mobile conveyor platform below (5) which in turn takes and carries the feed to the discharge outlet.

EP 0 053 583 A1

## Apparatus for drawing feed from cylindrical bales of hay, straw or other provender

It has become standard practice in recent times to bale hay, straw or other like crops into large, heavy cylindrical bundles by rolling up a single layer of the crop —arranged into a band, or mat— so as to spiral into the appropriate shape.

Normally speaking these bales are utilised by being introduced direct.to the stall, -where there will be one of a variety of apparatus designed for withdrawal of the feed.from the bale during its gradual distribution to each station, or into each manger.

In short, apparatus of this kind must unwind the bale and draw the feed therefrom in order to render it suitable for the intended purpose.

In practice, existing apparatus are possessed of a variety of drawbacks, -for instance, tendency to clog easily, inability to continue drawing out the feed to the end of the "band" - that is, complete unwinding of the bale, as well as being difficult to operate and manoeuvre, complicated, costly, and time-consuming and expensive to maintain etc. etc. as users are well aware.

One object of the invention described herein is that of obtaining entire withdrawal of the feed right to the end of the "band" which forms the complete bale. Another object is that of ensuring the avoidance of clogging.

Yet another object is that of creating a simply constructed apparatus, easy to maintain and —in particular— reliable with regard to normal function.

A further object is ease of operation —hence obviating the need for skilled personnel.

A further object still is that of permitting greater ease of manoeuvre.

In the case of the apparatus to which the invention relates, the cylindrical bale is deposited by whatever means —connected to the apparatus or otherwise— onto a moving surface, with its cylindrical axis horizontally disposed; the moving surface comprising, for instance, a succession of traverse members furnished with teeth, the said members connecting with looped tractive elements such as belts or chains.

This surface provides downwardly-inclined movement in order to ensure the bale's being carried towards, and urged against a rearwardly inclined stay, adjustable for angle of inclination, likewise comprising looped drag elements e.g. belts or chains carrying plain traverse members; the stay's function being that of imparting rotation to the bale while the teeth on the moving surface gradually strip away the substance of the bale itself.

That which is stripped from the bale is drawn subsequently towards an opening left free between the said surface and the lower extremity of the stay, and down into a lower section where a second conveyor, ideally similar to the first and having teeth of greater length than those of the first so as to interpose therewith, removes the feed therefrom and carries it toward the discharge.

The uppermost branch of the said lower, or second conveyor moves in the same direction as the lower branch of the first, or upper conveyor, travelling at a greater speed in order to ensure the removal of feed from the latter.

The three conveyors are mounted onto a chassis provided with three side panels which both prevent the feed from dispersing into unwanted areas and oblige it to be channelled in the desired direction.

The said chassis is wheeled, preferably, the front pair of which being dolly-steered, and provided with a coupling for towing by tractor or the like.

The afore-mentioned loop arrangements are caused to move simultaneously by a transmission link, —ideally a single unit— for example by chain with drive imparted from any suitable motorised means., most desirable of which being prop-shaft and universal joint linked to a tractor power take-off.

The lower conveyor teeth are offset with respect to those of the upper, and preferably less in number. The invention will now be described in greater detail, from which a clearer notion will emerge of a preferred, though not exclusive form of embodiment, illustrated as an unlimited example with the aid of the accompanying drawings, in which: -

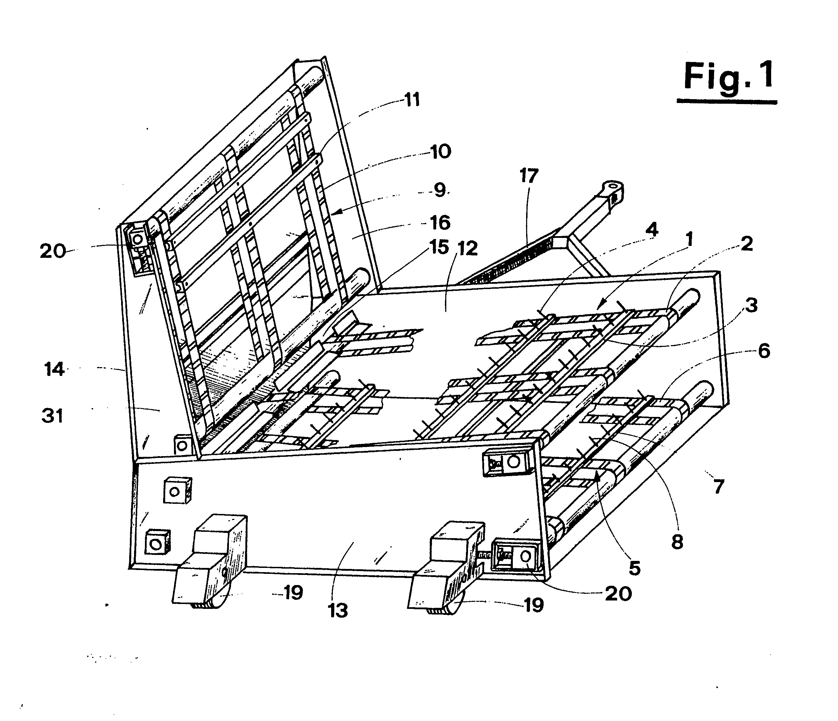

Fig 1    is a schematic representation of the entire apparatus, shown in perspective;

Fig 2    shows the cross-section of three drag loops, according to a vertical plane, demonstrating the preferred respective dispositions of same;

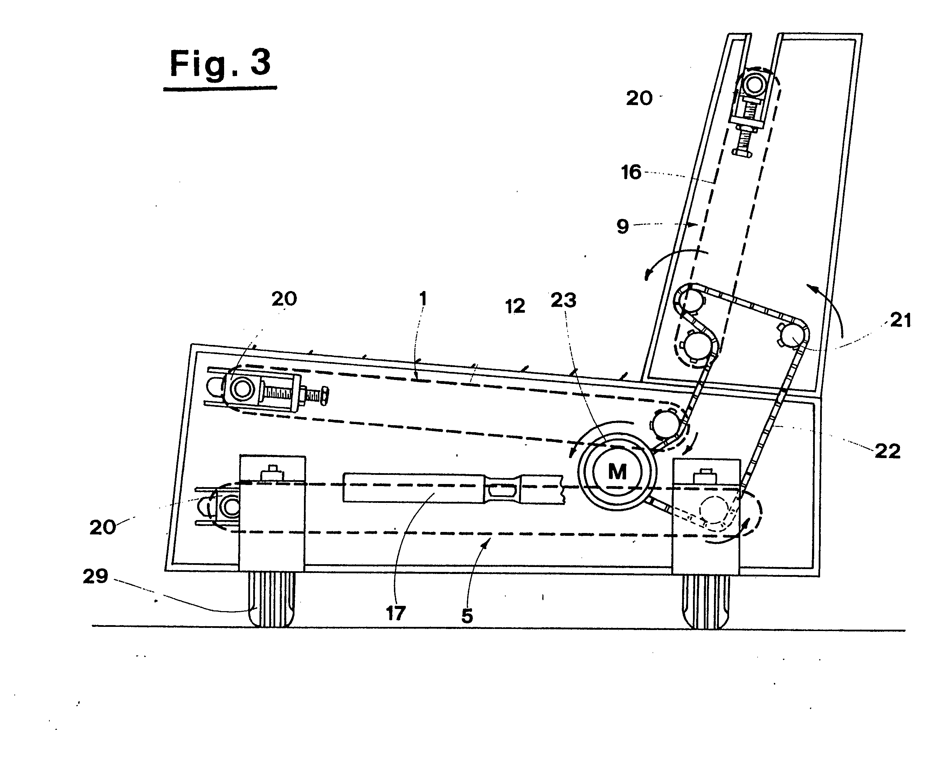

Fig 3    shows the front-face view of the apparatus, revealing its drive transmission arrangement.

With reference to the above drawings, 1 denotes a first endless conveyor which basically comprises a mat, or surface rotating in one direction only. The said conveyor consists of looped belts or chains 2 which carry traverse members 3 furnished with teeth 4, set apart and forwardly inclined with respect to the direction of movement, preferably at an angle of 45$^\circ$.

5 denotes a second endless conveyor disposed below the first and offering full face thereto, likewise basically comprising looped belts or chains 6 as well as traverse members 7, these too furnished with teeth, or barbs 8, the latter similarly inclined at an angle of 45° although conversely —that is rearwardly with respect to the direction of movement— and being of greater length than teeth 4 so as to interpose with the initial ranks of the latter on their return stretch and withdraw the feed therefrom. The up-turn extremity of conveyor 5 protrudes for a nominal distance beyond the down-turn extremity of conveyor 1.

9 denotes a backprop section, or stay, this also com--prising an endless conveyor consisting of looped belts or chains 10 carrying smooth traverse members 11 set apart so as to stand in relief thereby gripping the bale through friction. The said backprop, or stay 9 extends upward in a vertical —or more ideally in a slightly rearwardly-angled— direction from a line overlying the down-turn extremity of conveyor 1. The distance existing between the lower extremity of the stay and the first conveyor establishes an opening 15 of sufficient breadth for avoidance of collision between stay 9 and conveyor 1.

The conveyor itself defining stay 9 is motor-driven and revolves in one direction only, its sense of rotation being identical to that of conveyor 1, its running speed being less than that of the same said conveyor 1.

12 & 13 denote side panels which in the embodiment referred to herein combine with the loop-support shafts to form the chassis of the apparatus; the function of the said panels 12 & 13 being to provide forward and rear stops, preventing the feed from spilling out as well as containing and channelling the same towards the opening 15 existing between stay 9 and conveyor 1, the said opening preventing these last from coming into contact,-as previously mentioned.

14 denotes a lateral side panel which, in addition to preventing outward spillage of feed, provides a safety shield for the operator(s), and makes for the possibility —if desired— of a guide moulding 30 which assists the imposition of enforced passage of the feed in a downward direction.

31 & 16 denote two further side panels which extend upward in like manner to panel 14; these constituting chassis components for stay conveyor loop 9 as well as performing the function of feed-retaining walls and protective shield for operator(s).

A towing bar is indicated by 17, providing the means for linkage to the prime mover, —a tractor for example;
19 denotes two rear wheels and 29 two front wheels,
these latter being dolly-steered.

20 denotes slack take-up devices for obtaining correct
tension in the different drag loops.

21, 22 & 23 denote the transmission arrangement between
motor and driven parts in the apparatus, being -pinions,
chain and motor/power take-off respectively.

32 represents a floor, or tray positioned between the
two branches of conveyor 5 serving to prevent smaller
particles of feed from falling to the ground —the
apparatus being, ideally, without a recognisable base
as such; this in order to avoid would-be redundant
accumulations thereon, as well as to simplify running
and maintenance.

Conveyor 1 produces downwardly-inclined movement with
respect to and towards stay 9, the latter in turn being
rearwardly inclined, whilst conveyor 5 is disposed either
horizontally or inclined marginally, -in the opposite
direction to that of conveyor 1.

The apparatus functions in the following manner:
the cylindrical bale 24 is deposited onto conveyor 1
by whatever means —connected to the apparatus or otherwise- in such a way that its initial stretch 25 faces
towards opening 15, and that the bale itself leans against stay 9.

The apparatus is then put in motion causing teeth 4 to draw the underside of bale 24 occasioning both urging of the latter against stay 9, and channelling of feed therefrom into opening 15 from whence it will drop onto lower conveyor 5.

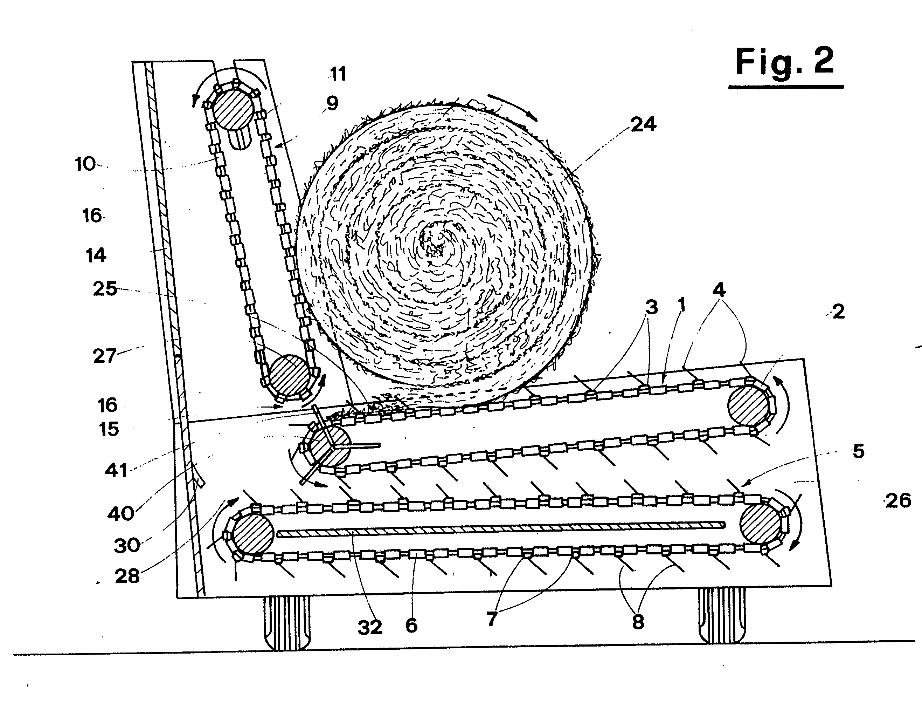

Teeth 4 continue drawing off feed from bale 24 thus causing the latter to unwind, stay 9 assisting therewith by dint of its imparting upward movement to the bale thereby obliging same to rotate as per the arrow (fig 2); teeth 4 are enabled to grip and strip the bale the more effectively thanks to the slower speed with which backprop, or stay 9 travels in relation thereto; thus stay 9 provides a retard mechanism by curbing the speed of rotation imparted to the bale 24 by conveyor 1.

In consequence, teeth 4 advance at greater speed than that of the bale's cylindrical surface —thus teeth 4 are able to strip feed from the bale thoroughly and evenly by virtue of their uniformly engaging the entire cylindrical surface area thereof.

Feed stripped from the bale by conveyor 1 is carried into the area denoted by 28 —this extending the width of conveyor 1 itself and enclosed from without by lateral side panel 14— from whence it drops into the space beneath, there to be gathered up by lower conveyor 5 whose barbs 8 collect same from teeth 4 —the more effectively since these 8 travel at greater speed than the latter 4— and carry it forward to the farther free extremity 26 causing its fall therefrom into the manger or in the vicinity of the litter.

The barbs 8 of conveyor 5 are inclined rearwardly with respect to the conveyor's forward movement, (see Fig 2) in order both to ensure drawing on of feed, and to make certain of its disengagement from same 8 at free extremity 26 where it must be discharged.

It will be seen further from Fig 2 that conveyors 1 & 5 open out "V"-fashion toward the exit; this in order to preclude the possibility of teeth 4 continuing to draw feed along during their underside return on conveyor 1.

In the event that bale 24 should be deposited onto surface 1 contrariwise to the manner described —that is, at variance with the natural unwinding spiral— nothing is altered, as teeth 4 will continue to strip off feed and carry it towards opening 15.

The angle of inclination of stay 9 may be made variable, for instance by adjustment at rotary shaft 27. Provision is made further for gathering up of feed discharged at 26 into a trough, for example, from whence it may be cast into the appropriate space for

0053583

consumption, perhaps by means of a pneumatic thrower. Ideally —and as an added means of reducing overall dimensions of the apparatus— one extremity of conveyor 1 should terminate at the foot of stay 9, whilst the corresponding conveyor 5 extremity be extended further a short space, the better to gather feed falling thereonto.

Shaft 40 —that is, the down-turn shaft around which conveyor 1 is looped— is furnished with longitudinal laminar elements 41 protruding radially therefrom between traverse members 3 so as to extend beyond the conveyor surface 1 for a radial distance all but greater than the extremity of teeth 4.

Thus it comes about that the feed, once grasped and carried along by teeth 4 to the down-turn at shaft 40, is withdrawn therefrom 4 hence from conveyor 1 by dint of the action of elements 41, enabling its fall onto conveyor 5 therebelow.

In short, these elements 41 serve as added assurance for the withdrawal of feed from the teeth of conveyor 1. Notwithstanding the embodiment described herein is towed, there is nothing to prevent the apparatus from being self-propelled, or its internal mechanism from being independently driven.

Numerous modifications of a practical nature may be

0053583

applied to the constructional details of the
invention without by any means straying from within
the bounds of protection afforded to the concept
thereof as described above, and as claimed below.

<u>Claims</u>

1)  Apparatus for drawing feed from cylindrical bales of
    hay, straw or other provender, characterised by the
    fact that it comprises:
    -a first motorised endless conveyor (1) rotating in
    one direction only, whose upper branch defines a
    mobile platform upon which the cylindrical bale is
    deposited with axis horizontal and disposed transversely
    with respect to direction of movement of conveyor (1);
    said conveyor (1) being furnished with teeth (4) distributed over its entire moving surface; said teeth (4)
    designed to engage said bale and grip the feed;
    -a backprop or stay 9 extending upward vertically —or
    rearwardly inclined to a nominal degree— from a longitudinal line overlying the downturn extremity of said
    conveyor (1) the distance between lower extremity of
    said stay and said conveyor (1) being sufficient to
    the avoidance of encroachment by one upon the other;
    -a second motorised endless conveyor (5), underlying
    the first conveyor (1) and rotating in one direction
    only, contrary to the direction of the said first
    conveyor.

2)  Apparatus according to claim 1 characterised by the
    fact that :

    ———————→

-the upper branch of first conveyor (1) is downwardly-
inclined along its own direction of movement;

-the lower branch of first conveyor (1) inclines in
such a way that the distance between same and said
second conveyor (5) increases with progressive movement
thereof;

-second conveyor (5) is furnished with barbs, or teeth (8)
distributed over its actual moving surface, designed
to withdraw the feed from the teeth of said first
conveyor (1);

-speed of movement of second conveyor (5) is greater
than that of first conveyor (1);

-length of teeth (4) & (8) of first and second conveyors
(1) & (5) is such that said teeth interpose reciprocally
at least for the initial stretch following up-turn of
second conveyor (5).

3) Apparatus according to claim 1 characterised by the
fact that teeth (4) of first conveyor (1) are forwardly
inclined with respect to the latter's direction of
movement, and teeth (8) of second conveyor (5) are
rearwardly inclined with respect to their respective
direction of movement.

4) Apparatus according to claim 1 characterised by the
fact that said stay (9) consists of the flat surface
of a third motorised endless conveyor rotating in one
direction only, in sympathy with the direction of said first conveyor (1), with a speed of movement less
than that of same and provided with elements standing
in relief designed to create friction between themselves and the bale surface.

5)   Apparatus according to claim 1 characterised by the
fact that said first and second conveyors (1) & (5)
each comprise a conveyor belt consisting of looped belts
or chains (2) & (6) carrying traverse members (3) & (7)
upon which said teeth (4) & (8) are mounted.

6)   Apparatus according to claim 1 characterised by the
fact that shaft (40) — that is, the shaft located at
the down-turn extremity around which said first conveyor (1) is looped— is furnished with longitudinal
laminar elements (41) protruding radially from shaft (40)
beyond the moving surface of said conveyor (1) for a
radial distance surpassing that of the extremity
of teeth (4); the action of said elements (41) being
that of assisting disengagement of feed from the teeth
of said first conveyor (1).

**Fig. 1**

**Fig. 2**

# Fig. 3

0053583

European Patent
Office

**EUROPEAN SEARCH REPORT**

Application number

EP 81 83 0191.3

| | DOCUMENTS CONSIDERED TO·BE RELEVANT | | CLASSIFICATION OF THE APPLICATION (Int. Cl.3) |
|---|---|---|---|
| Category | Citation of document with indication, where appropriate, of relevant passages | Relevant to claim | |
| | DE – A1 – 2 553 492 (GEBRÜDER WELGER)<br>* page 9, line 1 to page 10, line 3; fig. 1, 2 *<br>---<br>DE – A1 – 2 715 577 (GEBRÜDER WELGER)<br>* page 5, line 23 to page 6, line 22, fig. 1 *<br>---<br>GB – A – 2 027 670 (A.R. DUNCAN)<br>* page 1, lines 29 to 43; fig. 1 to 3 *<br>---<br>US – A – 4 195 958 (V.F. VAHLKAMP et al.}<br>* abstract; fig. 1 to 3 *<br>---- | 1,2,5<br><br><br><br>1,2,5<br><br><br><br>1,5<br><br><br>1,5 | A 01 K    5/00 |

**TECHNICAL FIELDS SEARCHED (Int. Cl.3)**

A 01 D    87/12
A 01 D    90/10
A 01 K    5/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 14-12-1981 | SCHOFER |

EPO Form 1503.1   08.78